# EUROPÄISCHE PATENTANMELDUNG

(11) **EP 3 713 023 A1**
(43) Veröffentlichungstag der Anmeldung: **23.09.2020**
(21) Anmeldenummer: 20163863.2
(22) Anmeldetag: 18.03.2020
(51) Int. Cl.: H02G 1/12

(54) **ABISOLIERVORRICHTUNG SOWIE VERFAHREN**

(30) Priorität: 19.03.2019 DE 102019203708
(71) Anmelder: Schäfer Werkzeug- und Sondermaschinenbau GmbH, 76669 Bad Schönborn (DE)
(72) Erfinder: Haag, Werner, 76669 Bad Schönborn-Langenbrücken (DE); Flitsch, Frank, 76669 Bad Schönborn-Langenbrücken (DE); Wührer, Alexander, 76669 Bad Schönborn-Langenbrücken (DE)
(74) Vertreter: Hoffmann Eitle

(57) **Zusammenfassung**

Die Erfindung stellt eine Abisoliervorrichtung bereit. Die Abisoliervorrichtung umfasst eine Abisoliermessereinrichtung und eine Kontaktiereinrichtung, wobei die Abisoliermessereinrichtung und die Kontaktiereinrichtung unabhängig voneinander beweglich sind. Die Kontaktiereinrichtung ist eingerichtet, an einem Endabschnitt des Kabels einen Kontakt mit einer oder mehreren Kabellitzen herzustellen.

## Beschreibung

### Technisches Gebiet

Die Erfindung betrifft eine Abisoliervorrichtung, die zum Abisolieren eines Kabels geeignet ist. Ferner betrifft die Erfindung ein Verfahren.

### Stand der Technik

Im Bereich der Abisoliervorrichtung sind solche mit einer Abisoliermessereinrichtung bekannt. Einer der Aspekte bei der Konstruktion einer solchen Abisoliervorrichtung ist dabei, ein schonendes Ablösen der Isolierung von den Kabellitzen zu ermöglichen.

Die JP H07 236214 A beispielsweise enthält einen Defektdetektor, welcher eine mögliche Berührung eines Messerpaares mit den Kabellitzen detektiert. Beim Abisoliervorgang werden die beiden Messer eines Messerpaars der Abisoliervorrichtung aufeinander zu bewegt und durch die Isolierung gedrückt. Anschließend wird das Messerpaar in eine zu dieser Zustellbewegung entgegengesetzten Richtung bewegt, wobei die beiden Messer des Messerpaars jedoch weiter mit dem Kabelmantel in Kontakt bleiben. Bei der Zustellbewegung wird über eine Auswerteeinheit an der Abisoliermessereinrichtung ein möglicher Kontakt der Messer oder eines Messers mit den Kabellitzen detektiert. Zusätzlich kann die Abisoliermessereinrichtung eine elektrische Isolation des Messerpaars aufweisen. Im nachfolgenden Verfahrensschritt wird das Messerpaar in einer zur Längsrichtung des Kabels parallelen Richtung bewegt, um die Kabelisolierung abzustreifen.

Allerdings besteht darin ein Problem, dass beispielsweise auf Grund von Qualitätsschwankungen bei den Kabeln oder bei einer nicht präzisen Ausrichtung der Kabel relativ zum Messerpaar ein Messer beim Abisolieren zu tief in das Kabel eindringen könnte. Dadurch besteht die Gefahr, dass durch die Schneidkanten der Messer die Litzen beschädigt werden.

Wird durch diesen Vorgang eine Litze durchtrennt und beim Abstreifen der Kabelisolierung eine Litze mit abgezogen, weist dieses schadhafte Kabel eine Kabelader auf, die sich im Durchmesser beziehungsweise in der Durchmessergestalt von solchen unterscheidet, die beim Abisolieren unbeschädigt verblieben sind.

Bei Abisoliervorrichtungen sind ferner sogenannte Nullschnittmesser bekannt, um die Position des Kabelendes durch Abtrennen des Kabelüberstandes für mögliche anschließende Vorgänge zu bestimmen und das Kabelende mit einem definierten Schnitt vor eventuell überstehender oder zurückstehender Isolierung oder überstehenden oder zurückstehenden Einzellitzen zu stutzen.

### Gegenstand der Erfindung

Die Erfindung zielt darauf ab, eine Abisoliervorrichtung mit einer Abisoliermessereinrichtung und einer Kontaktierungseinrichtung bereitzustellen, mit der ein Kabel qualitativ hochwertig verarbeitet werden kann.

Der Gegenstand des Anspruchs 1 stellt eine entsprechende Abisoliervorrichtung bereit. Weitere bevorzugte Ausführungsformen sind in den abhängigen Ansprüchen aufgeführt. Ferner betrifft die Erfindung ein Verfahren.

Dabei ist ein Gedanke der Erfindung, eine Kontaktierungseinrichtung, in der vorliegenden Ausführungsform als Nullschnittmessereinrichtung ausgebildet, und eine Abisoliermessereinrichtung in einer Abisoliervorrichtung zu kombinieren, um damit einen Abisoliervorgang durchzuführen.

Die Erfindung betrifft eine Vorrichtung, um den Abisoliervorgang einer Abisoliermessereinrichtung zu verbessern, so dass ein beschädigungsfreies Abisolieren eines Kabelendes ermöglicht wird.

Hierfür stellt die Erfindung eine Abisoliervorrichtung zum Abisolieren einer Kabelisolation mit einer Abisoliermessereinrichtung und einer Nullschnittmessereinrichtung bereit. Die beiden Messereinrichtungen (Abisoliermessereinrichtung und Nullschnittmessereinrichtung) sind dabei voneinander unabhängig beweglich. Dadurch kann der Abisoliervorgang eines Kabels beschädigungsfrei erfolgen.

Durch die Kombination der Abisoliermessereinrichtung und Nullschnittmessereinrichtung kann die Nullschnittmessereinrichtung für zusätzliche Funktionen genutzt werden. Dabei kann auch der Nullschnitt der Nullschnittmessereinrichtung in mehrere Stufen unterteilt werden. Zu Beginn des Abisoliervorgangs kann die Nullschnittmessereinrichtung die Isolierung durchdringen und die Litzen berühren, so dass damit ein Kontakt zwischen der Nullschnittmessereinrichtung und der Kabellitze hergestellt wird. Anschließend kann die Abisoliermessereinrichtung in die Isolierung einschneiden, wobei ein Kontakt zur Kabellitze vermieden wird, wobei eine ungewollte Kontaktierung der Abisoliermessereinrichtung mit den Kabellitzen detektiert wird.

Die beiden Messereinrichtungen (die Nullschnittmessereinrichtung und die Abisoliermessereinrichtung) sind voneinander elektrisch isoliert befestigt und können daher unterschiedliche elektrische Potentiale besitzen. An einer der Messereinrichtungen ist eine Detektion durch die Auswerteeinrichtung vorgesehen. Damit kann durch die Abisoliermessereinrichtung und/oder Nullschnittmessereinrichtung eine Detektion an der Auswerteeinrichtung durchgeführt werden. Folglich kann sichergestellt werden, dass die Abisoliermessereinrichtung der Abisoliervorrichtung nicht zu tief in die Isolierung einschneidet, da ansonsten eine Kontaktierung detektiert wird.

Falls ein Kontakt des Abisoliermesserpaars der Abisoliermessereinrichtung mit der Litze erfolgt, kann die Auswerteeinheit den Kontakt anhand einer Spannungsmessung detektieren. Zusätzlich erfolgt die unabhängige Bewegung zwischen der Abisoliermessereinrichtung und der Nullschnittmessereinrichtung in der bevorzugten Ausführungsform über eine zusätzliche Verfahrensachse.

Gemäß einer Ausführungsform weist die Abisoliervorrichtung einen variablen Abstand zwischen der Abisoliermessereinrichtung und Nullschnittmessereinrichtung auf, wodurch eine vorher festgelegte Länge des abzuisolierenden Kabels eingehalten werden kann und in einer möglichen Ausführungsform die Abisolierlänge über die Abstandsanpassung zwischen Abisoliermessereinrichtung und/oder Nullschnittmessereinrichtung variiert werden kann. Mögliche weitere Verarbeitungsschritte für das abisolierte Kabel ist beispielsweise das Vercrimpen. Daher müssen die abisolierten Kabellitzen frei von Beschädigungen sein, um eine hochwertige Qualität des Kabels einzuhalten.

Gemäß einer Ausführungsform weist die Abisoliervorrichtung eine Absaugeinrichtung oder Abblasvorrichtung auf, um den abgetrennten Nullschnitt und die abgezogene Isolierung aus der Abisoliervorrichtung zu entfernen. Dadurch kann das Abisolieren einfach und sicher durchgeführt werden.

Eine bevorzugte Ausführungsform umfasst einen Kabelgreifer, welcher das Kabel in Richtung Messereinrichtung oder entgegengesetzt führt. Dadurch kann das Abisolieren einfach und sicherer durchgeführt werden. Der Kabelgreifer hat weiterhin die Funktion, das Kabel während des Abisoliervorgangs zu fixieren. Beispielsweise kann der Kabelgreifer das Kabel während des Abzugs der Abisolierung durch die Abisoliermessereinrichtung fixieren.

Die Greifereinrichtung ist gemäß einer Ausführungsform an der Abisoliervorrichtung vorgesehen, wodurch das Abziehen der Isolation durchgeführt werden kann. Damit kann die Abisolation einfach und sicher durchgeführt werden.

Die Abisoliervorrichtung ist bevorzugt so konfiguriert, dass verschiedene Verfahren zum Abisolieren einer Isolierung eines Kabels umgesetzt werden können.

In einer Ausführungsform wird der Abziehvorgang durch die Kontaktierungseinrichtung, in der bevorzugten Ausführungsform als Nullschnittmessereinrichtung ausgebildet, vorgenommen. Durch die unabhängige Bewegung der Messerpaare und den variablen Abstand zwischen der Abisoliermessereinrichtung und Nullschnittmessereinrichtung kann die Nullschnittmessereinrichtung in Richtung Abisoliermessereinrichtung versetzt werden und dadurch der Abziehvorgang, als Teilschritt des Abisoliervorgangs, von der Nullschnittmessereinrichtung durchgeführt werden. Damit kann der Abziehvorgang einfach und sicher durch die Nullschnittmessereinrichtung durchgeführt werden.

Eine weitere Ausführungsform umfasst eine Abisoliermessereinrichtung, Nullschnittmessereinrichtung und eine Greifereinrichtung, wobei die Greifereinrichtung den Abziehvorgang oder einen Teil der Abziehbewegung der abgetrennten Kabelisolierung durchführt. In einer bevorzugten Variante ist die Greifereinrichtung an der unabhängig beweglichen Nullschnittmessereinrichtung befestigt und wird durch die Bewegung der Nullschnittmessereinrichtung gesteuert. In einer Modifikation kann die Greifereinrichtung beispielsweise in einer eigenständigen Station konfiguriert sein. Die Greifereinrichtung hat den Vorteil, dass durch eine geeignete Geometrie und Materialwahl die Kabellitze nicht beschädigt wird.

Bei einer weiteren Ausführungsform kann ein Abziehvorgang durch die Abisoliermessereinrichtung und in Kombination zum Kabelgreifer erfolgen. Damit kann die Abisolation einfach und sicher durchgeführt werden.

In einer weiteren Ausführungsform der Abisoliervorrichtung führt die Abisoliermessereinrichtung den Nullschnitt durch. Zusätzlich kann die Kontaktierungseinrichtung einer weiteren Ausführungsform eine stumpfe Geometrie aufweisen.

Gemäß einer weiteren Variante wird der Nullschnitt erst nach dem Abisoliervorgang durchgeführt. Es kann vorgesehen sein, dass die Funktionen und Aufgaben der Nullschnittmessereinrichtung durch die Abisoliermessereinrichtung übernommen werden.

### Kurze Beschreibung der Zeichnungen

- Fig. 1: zeigt eine perspektivische Ansicht einer ersten Ausführungsform der Erfindung.
- Fig. 2: zeigt eine schematische Detailansicht der ersten Ausführungsform der Erfindung gemäß Fig. 1.
- Fig. 3A-3F: zeigt die bevorzugte, erste Ausführungsform mit der Abfolge (A-F), in der die Nullschnittmessereinrichtung das Kabel kontaktiert und die Abisoliermessereinrichtung die Isolierung durchtrennt.
- Fig. 4A-4F: zeigt die erste Ausführungsform mit der die Abisolierung durch die Nullschnittmessereinrichtung über die Schritte A-F erfolgt in Kombination mit der vorherigen Abfolge aus Fig. 3.
- Fig. 5A-5F: zeigt eine zweite Ausführungsform mit der die Abisolierung über die Nullschnittmessereinrichtung in Schritten A-F durchgeführt wird in Kombination mit der vorhergehenden Abfolge wie in Fig. 3 dargestellt.
- Fig. 6: zeigt eine dritte Ausführungsform mit der die Abisolierung über die Abisoliermessereinrichtung stattfindet in Kombination zur vorhergehenden Abfolge aus Fig. 3.

### Detaillierte Beschreibung der bevorzugten Ausführungsformen

Anhand der Figuren werden bevorzugte Ausführungsformen der Erfindung beschrieben. Obwohl die Ausführungsformen beispielhaft, und nicht einschränkend, zu verstehen sind, können Einzelmerkmale der Ausführungsformen auch zur Charakterisierung der Erfindung herangezogen werden. Ferner können Modifikationen der nachfolgend beschriebenen Ausführungsform jeweils einzeln miteinander kombiniert werden, um weitere Ausführungsformen der Erfindung auszubilden.

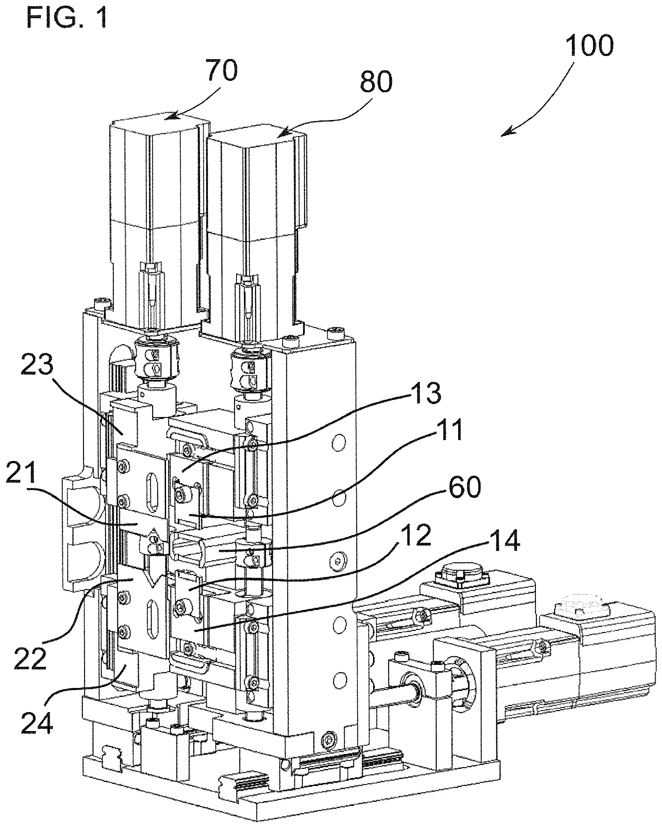

Figur 1 zeigt eine Abisoliervorrichtung einer ersten Ausführungsform, deren Einrichtungen unter Bezugnahme der Figur 1-4F genauer beschrieben wird.

Die Abisoliervorrichtung 100 ist dazu ausgelegt, eine Isolierung von einem Kabel 40 zu entfernen und dabei eine Abisoliermessereinrichtung 20 und eine Kontaktierungseinrichtung, in der vorliegenden Ausführungsform als Nullschnittmessereinrichtung 10 ausgebildet, umfasst, welche dadurch gekennzeichnet sind, dass die Abisoliermessereinrichtung 20 und die Nullschnittmessereinrichtung 10 voneinander unabhängig beweglich sind. Dadurch ist sichergestellt, dass die Abisoliermessereinrichtung 20 unabhängig von der Nullschnittmessereinrichtung 10 bewegt und gesteuert werden kann. In einer bevorzugten Ausführungsform werden die Nullschnittmessereinrichtung 10 und die Abisoliermessereinrichtung 20 von separaten elektromechanischen Antriebseinheiten 70, 80 bewegt.

Die Abisoliermessereinrichtung 20 enthält ein erstes Messerpaar 21, 22, wobei jedes Messer an einem jeweiligen Halter 23, 24 angebracht ist. Gemäß einer Modifikation kann die Abisoliermessereinrichtung aus mehreren Messern und Messerpaaren bestehen.

Ein Messerpaar besitzt zwei Messer, eine erstes Messer 21, das an einem ersten Halter 23 angebracht ist, und ein zweites Messer 22, das an einem zweiten Halter 24 angebracht ist. Dabei ist jedes Messer mit jeweils zwei Schrauben 231, 232, 242, 241 am Halter angebracht, wobei die Anzahl der Schrauben und Messer nicht auf zwei festgelegt ist, und auch andere Befestigungsmittel verwendet werden können.

Die beiden Messer 21, 22 sind im Wesentlichen spiegelbildlich zueinander vorgesehen. Die Messer sind aus einem leitenden Material (beispielsweise aus einem Metall) hergestellt. Die beiden Messer 21, 22 haben beispielweise eine V-förmige Schneidkante.

Die Schneidkante am jeweiligen Messer 21, 22 ist in Richtung des Kabels vorgesehen, mit der Funktion, dass die beiden Messer bei einer Bewegung zueinander mit der Schneidkante in die Kabelisolierung 42 eines Kabels 40 eindrücken und diese durchtrennen. Die beiden Messer 21, 22 der Abisoliermessereinrichtung bewegen sich beispielsweise bei einer aufeinander zu Bewegung aneinander vorbei, wobei der Abstand in horizontaler Richtung sehr klein gewählt wird, so dass ein sicheres Durchtrennen der Kabelisolation gewährleistet ist. In einer weiteren Ausführungsform können die jeweiligen Messer oder ein Messer 21, 22 auch als Quetschschnittmesser, Formmesser oder Düsenmesser ausgebildet sein oder als Scherenschnittmesser.

Die Nullschnittmessereinrichtung 10 enthält ein Messerpaar 11, 12, wobei jedes Messer an einem Halter 13, 14 angebracht ist. Gemäß einer Modifikation kann die Nullschnittmessereinrichtung auch aus mehreren Messern bestehen. Ein Messerpaar besitzt beispielsweise zwei Messer, nämlich ein erstes Messer 11, das an einem ersten Halter 13 angebracht ist, und ein zweites Messer 12, das an einem zweiten Halter 14 angebracht ist. Dabei ist jedes Messer mit zwei Schrauben 131, 132, 142, 141 am Halter angebracht, wobei die Anzahl der Schrauben nicht auf zwei festgelegt ist, und auch andere Befestigungsmittel verwendet werden können. Die beiden Messer 11, 12 sind im Wesentlichen spiegelbildlich zueinander vorgesehen.

Die Messer 11, 12 sind aus einem leitenden Material (beispielsweise aus einem Metall) gefertigt. Die beiden Messer 11, 12 haben beispielsweise eine V-förmige Schneidkante.

Die Schneidkante am jeweiligen Messer 11, 12 ist in Richtung des Kabels vorgesehen, mit der Funktion, dass die beiden Messer bei einer Bewegung zueinander mit der Schneidkante in die Kabelisolierung 42 eines Kabels 40 eindringen und die Kabelisolierung 42 durchtrennen. Die beiden Messer 11, 12 der Nullschnittmessereinrichtung bewegen sich dabei beispielsweise aneinander vorbei, wobei der Abstand in horizontaler Richtung relativ klein gewählt wird, so dass ein sicheres Durchtrennen der Kabelisolation gewährleistet ist.

In einer weiteren Ausführungsform können die jeweiligen Messer oder ein Messer 11, 12 auch als Quetschschnittmesser, Formmesser oder Düsenmesser ausgebildet sein oder als Scherenschnittmesser. In einer weiteren Ausführungsform kann die Kontaktierungseinrichtung beispielsweise eine stumpfe Geometrie aufweisen.

Die Messer 11, 12, 21, 22 der Abisoliermessereinrichtung 20 und der Nullschnittmessereinrichtung 10 sind in einer ersten Richtung (bspw. vertikale Richtung) bewegbar. Insbesondere können die Messer zum Abisolieren einer Kabelisolierung aufeinander zu und voneinander weg bewegt werden. Die beiden Messer 11, 12, 21, 22 der Abisoliermessereinrichtung und Nullschnittmessereinrichtung bewegen sich bei einer aufeinander zu Bewegung beispielsweise aneinander vorbei. Die zueinander weisenden Seitenflächen des ersten und zweiten Messers 11, 12, 21, 22 sind beispielsweise in einer zur ersten Richtung im Wesentlichen senkrechten zweiten Richtung (bspw. horizontale Richtung) mit einem Abstand voneinander beabstandet. Durch diesen Abstand wird sichergestellt, dass sich die Messer gegebenenfalls abschnittsweise überlappen können, ohne miteinander in Eingriff zu geraten, selbst wenn die Messer beim Abisolieren oder Abstreifen des Kabelmantels verformt werden.

In der Ausführungsform sind in der Abisoliervorrichtung 100 das eine Messerpaar 11, 12, 21, 22 gegenüber dem anderen oder weiteren Messerpaar elektrisch isoliert auf dem Messerhalter 13, 14, 23, 24 befestigt. Die Isolierung, welche die Messer gegenüber den Messerhaltern elektrisch isoliert, kann am jeweiligen Halter beispielsweise angeschraubt, angeklebt oder auf eine andere Weise angebunden sein.

Bei der Abisoliervorrichtung 100 ist die Nullschnittmessereinrichtung 10 durch eine oder mehrere zusätzliche Verfahrensachsen unabhängig von der Abisoliermessereinrichtung 20 beweglich. Dadurch kann die Abisoliermessereinrichtung und die Nullschnittmessereinrichtung unabhängig voneinander bewegt und gesteuert werden.

Gemäß der Ausführungsform ist die Abisoliervorrichtung 100 eingerichtet, den Abstand zwischen der Abisoliermessereinrichtung 20 und der Nullschnittmessereinrichtung 10 zu variieren. Insbesondere ist die Nullschnittmessereinrichtung 10 relativ zur Abisoliermessereinrichtung 20 voreilend konfiguriert. Dabei ist die Abisoliermessereinrichtung 20 zwischen dem Kabelgreifer und der Nullschnittmessereinrichtung 10 angebracht. Ein variabler Abstand zwischen der Nullschnittmessereinrichtung und der Abisoliermessereinrichtung ermöglicht es ferner, den Abstand vor, während, als auch nach dem Abisoliervorgang zu verändern.

Gemäß der Ausführungsform der Abisoliervorrichtung 100 steht die Abisoliermessereinrichtung 20 und/oder die Nullschnittmessereinrichtung 10 mit einer Auswerteeinheit in Verbindung. Die Auswerteeinheit ist dabei an die Abisoliermessereinrichtung 20 und/oder an die Nullschnittmessereinrichtung 10 angebunden, und so konfiguriert, dass Signale übertragen werden können. Diese Signale können beispielsweise elektrischer Strom oder elektrische Spannung sein.

Die Abisoliervorrichtung 100 umfasst eine Absaugeinrichtung 60, die zur Absaugung einer abgetrennten Isolierung 42 und/oder des Nullschnitts konfiguriert ist. Die Absaugeinrichtung 60 entfernt eine lose Kabelisolation 42, welche beim Abisoliervorgang anfällt, so dass sich in der Abisoliervorrichtung keine Abisolierreste ansammeln. Die Abfallentsorgung kann auch blasend ausgeführt werden, um die Kabelisolation 42 oder den Nullschnitt, also die Abisolierreste, wegzublasen.

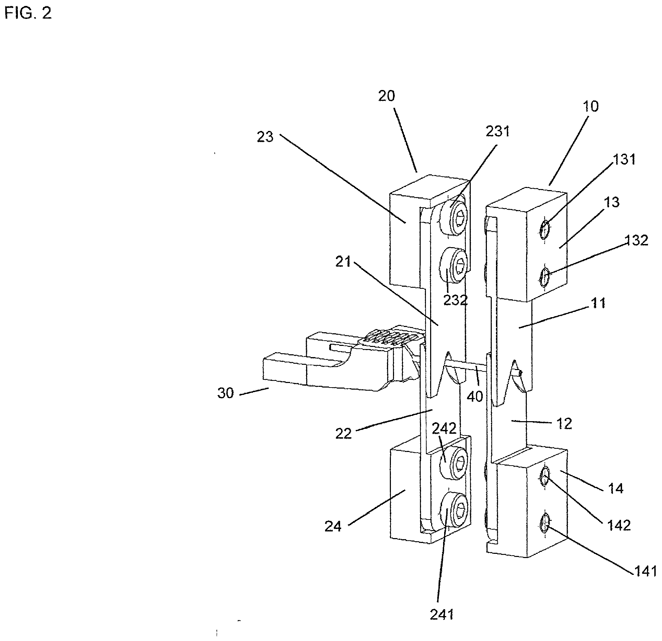

Die Abisoliervorrichtung 100 enthält einen Kabelgreifer 30, welcher das Kabel Richtung Messereinrichtung oder entgegengesetzt führt. Der Kabelgreifer führt das Kabel in die Abisoliermessereinrichtung und Nullschnittmessereinrichtung ein, und ist daher der Abisoliermessereinrichtung im Verhältnis zur Nullschnittmessereinrichtung an erster Stelle angebracht (siehe hierzu auch Figur 2).

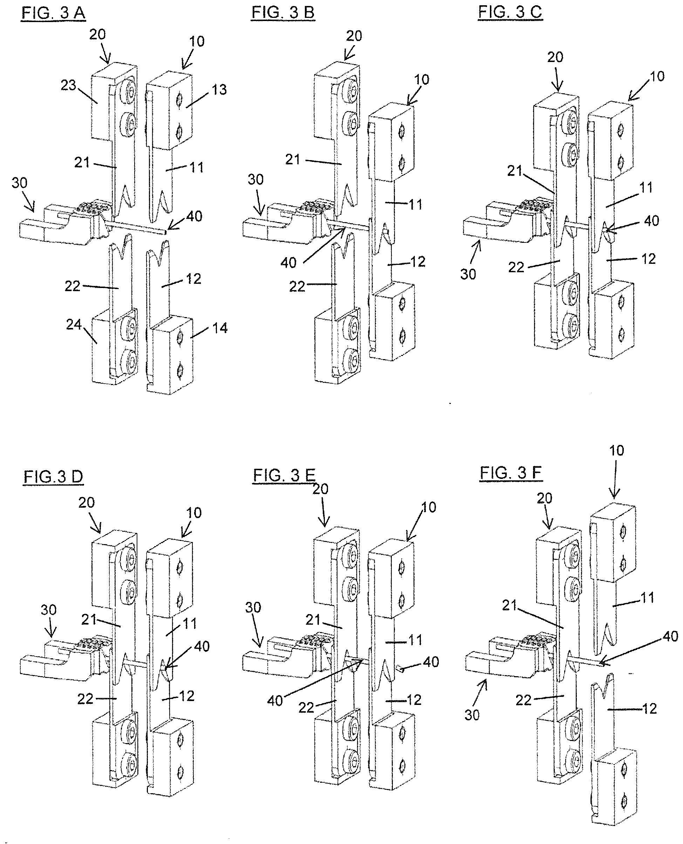

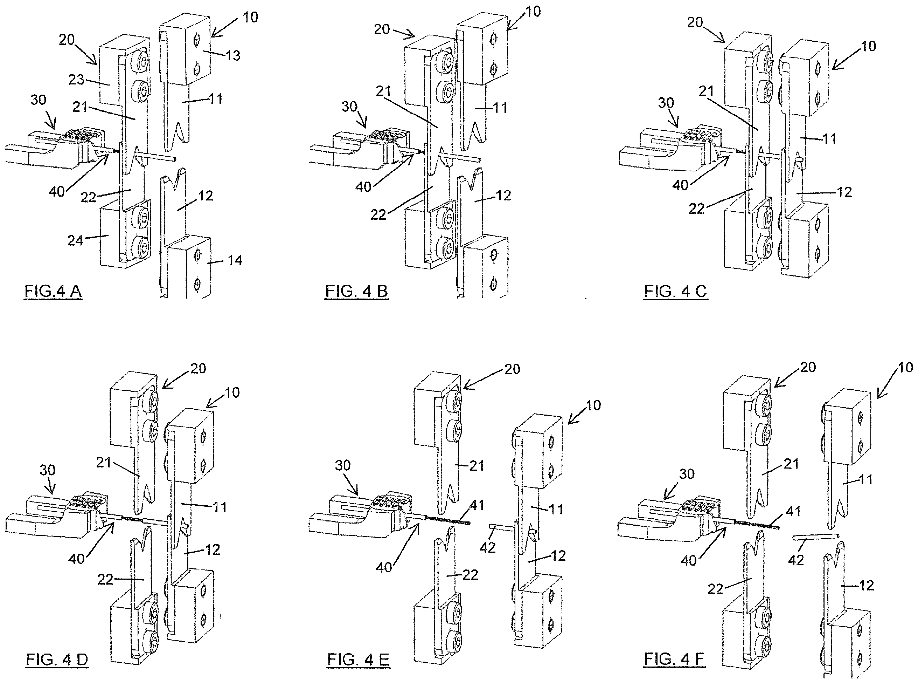

Die Abisoliervorrichtung 100 umfasst in der ersten Ausführungsform die Abisoliermessereinrichtung 20, die Nullschnittmessereinrichtung 10, die Kabelgreifer 30, die Absaugeinrichtung 60 und die Auswerteeinheit wie in Figur 1 dargestellt. Zusätzlich ist die Nullschnittmessereinrichtung 10 von der Abisoliermessereinrichtung 20 elektrisch isoliert angebracht und die Nullschnittmessereinrichtung 10 ist relativ zur Abisoliermessereinrichtung 20 voreilend. Die Abisoliervorrichtung 100 ist in der ersten, bevorzugten Ausführungsform so ausgestattet, dass der Abziehvorgang durch die Nullschnittmessereinrichtung 20 durchgeführt werden kann (siehe auch Figur 3A-3F, Figur 4A-4F).

Im ersten Schritt (Figur 3 A) des Abisoliervorgangs in Figur 2 schneidet die Nullschnittmessereinrichtung mit der Schneidkante der beiden Messer 11, 12 durch eine aufeinander zu Bewegung das Kabel auf elektrischen Kontakt zur Litze ein, jedoch findet keine ganze Durchtrennung der Litzen statt (Figur 3 B). Das Messerpaar 11, 12 der Nullschnittmessereinrichtung hat damit durch die Kabelisolation und geringfügig durch die Kabellitze geschnitten, aber so tief, dass einige Kabellitzen des Kabels berührt oder durchtrennt sind. Zusätzlich ist der Abstand zwischen der Nullschnittmessereinrichtung und der Abisoliermessereinrichtung auf eine bestimmte Abisolierlänge eingestellt (siehe Figur 3 A, B).

Die Abisolierlänge ist die Länge des Kabels, welche von der Abisoliermessereinrichtung und Nullschnittmessereinrichtung in der zweiten Richtung (beispielsweise horizontal) begrenzt wird und gleichzeitig die Länge, auf der die Kabelisolierung des Kabels entfernt wird.

Anschließend schneidet die Abisoliereinrichtung durch eine aufeinander zu Bewegung der Messer 21, 22 auf Abisoliertiefe, welche die Tiefe beschreibt in der nur die Kabelisolation 42 mit den Schneidkanten der Messer 21, 22 durchtrennt wird, ein (Figur 3 C). Gleichzeitig findet an der Auswerteeinheit ein Detektionsvorgang statt.

Über eine Durchgangsmessung wird kontrolliert, ob die Abisoliermessereinrichtung den Kabelmantel durchtrennt hat und zusätzlich zum Kabelmantel 42 die Kabellitze berührt wurde und damit an der Schneidkante der Messer 21, 22 einen Kontakt zur Litze vorhanden ist (Figur 3 D). Durch den Kontakt kann eine Potentialdifferenz zwischen den Messerpaaren 11, 12, 21, 22 detektiert werden. Wird ein Kontakt über den Detektionsvorgang an der Auswerteeinheit festgestellt, kann eine Beschädigung der Kabellitze 41 des Kabels 40 nicht ausgeschlossen werden. Das beschädigte Kabel kann daher aussortiert werden, je nach Anforderungen an die Verarbeitung.

Mit anderen Worten, durch den gleichzeitigen mechanischen Kontakt einer elektrisch leitfähigen Abisoliermessereinrichtung 20 (Abisoliermesserkante) und dem mechanischen Kontakt einer elektrisch leitfähigen Kontaktiereinrichtung 10, z.Bsp. Schneidkante der Nullschnittmessereinrichtung, mit einer oder mehreren Kabellitzen werden die beiden Einrichtungen durch die elektrisch leitfähigen Kabellitzen niederohmig und damit elektrisch leitfähig miteinander verbunden. Zuvor waren die beiden Einrichtungen elektrisch hochohmig voneinander isoliert und damit elektrisch getrennt. Die elektrische Widerstandsänderung, in der Funktionsweise ähnlich der eines elektrischen Schließkontakts, kann durch die Auswerteeinheit in der Funktionsweise einer elektrischen Durchgangserkennung detektiert werden.

Im weiteren Ablauf einer Abisolierung, erfolgt meist ein Rückhub der Abisoliermessereinrichtung (Figur 3 E). Ein Rückhub bezeichnet ein geringfügiges öffnen der beiden Messer 21, 22 der Abisoliermessereinrichtung, jedoch bleibt ein Kontakt zwischen den Messern 21, 22 und der Kabelisolation 42 bestehen. Dabei wird die Detektionseinrichtung nicht abgeschaltet und ein möglicher, eventuell weiterer Kontakt der Abisoliermessereinrichtung mit der Litze während des Vorgangs wird ebenfalls kontrolliert.

Danach schneidet die Nullschnittmessereinrichtung das Kabel 40, bestehend aus der Kabelisolierung 42 und Kabellitze 41, vollständig durch (Figur 3 E). Anschließend öffnen die Nullschnittmessereinrichtung (Figur 3 F) in dem das erste Messer 11 und das zweite Messer 12 in entgegengesetzte Richtung bewegt werden. Das vollständige Durchtrennen des Kabels 40 auf die Abisolierlänge durch die Nullschnittmessereinrichtung 10 wird als Nullschnitt bezeichnet. Das durch die Nullschnittmessereinrichtung abgetrennte Kabelstück 40 wird dann beispielsweise von der Absaugeinrichtung 60 entfernt, so dass das abgetrennte Kabelstück nicht den Abisoliervorgang stören oder behindern kann.

Das anschließende Abziehen oder Abstreifen der Isolation (Abziehvorgang) kann in den verschiedenen Ausführungsformen in verschiedenen Verfahrensabläufen durchgeführt werden. Dabei sind die Verfahrensabläufe immer, wie in Figur 3A-3F dargestellt, mit dem letzten Schritt (Figur 3 F) der Nullschnittmessereinrichtung kombinierbar. Im Schritt Figur 3 F hat die Nullschnittmessereinrichtung die Kabelisolation 42 und die Kabellitze 41 durchtrennt und die Abisoliermessereinrichtung hat die Kabelisolierung 42 eingeschnitten, so dass die Kabelisolierung 42 sich noch um die Kabellitze 41 befindet. Als letzten allgemeinen Schritt öffnen die Messer 11, 12 der Nullschnittmessereinrichtung 10 durch eine Bewegung in entgegengesetzte Richtung.

In der ersten Ausführungsform wird der Abziehvorgang durch die Nullschnittmessereinrichtung 10 vorgenommen (Figur 4A-4F). Durch den variablen Abstand zwischen der Abisoliermessereinrichtung und Nullschnittmessereinrichtung wird die Nullschnittmessereinrichtung in Richtung Abisoliermessereinrichtung für den Abisoliervorgang in einer zur Längsrichtung des Kabels parallelen Richtung, ausgehende vom letzten Schritt Figur 3 F, versetzt (Figur 4 A). Im nächsten Schritt (Figur 4 B, C) schneidet die Nullschnittmessereinrichtung in den bereits abgetrennten Kabelisolationsabschnitt geringfügig, aber nicht auf Kontakt mit der Kabellitze 41, in das Kabel 40 ein. Dann öffnet die Abisoliermessereinrichtung und die beiden Messer 21, 22 werden in die entgegengesetzte Richtung geführt (Figur 4 D).

Die Abziehbewegung der Nullschnittmessereinrichtung findet durch eine Abstandsvergrößerung zur Abisoliermessereinrichtung in einer zur Längsrichtung des Kabels 40 parallelen Richtung statt (Figur 4 E), während weiterhin ein Detektionsvorgang von der Auswerteeinheit durchgeführt wird. Dabei ziehen die beiden Messer 11, 12 der Nullschnittmessereinrichtung mit einem leichten Kontakt mit der Kabelisolierung 42 die Isolierung durch eine Bewegung, die den Abstand zwischen Abisoliermessereinrichtung und Nullschnittmessereinrichtung vergrößert, von der Kabellitze 41 des Kabels 40 ab. Dann öffnet die Nullschnittmessereinrichtung 10 wieder, indem sich beide Messer 11, 12 in entgegen gesetzte Richtungen bewegen. Durch die Öffnungsbewegung kann die eventuell festhängende Kabelisolierung abgestreift werden. Dadurch kann die abgetrennte Kabelisolierung 42 beispielweise durch die Absaugeinrichtung 60 aus der Abisoliervorrichtung 100 entfernt werden (Figur 4 F).

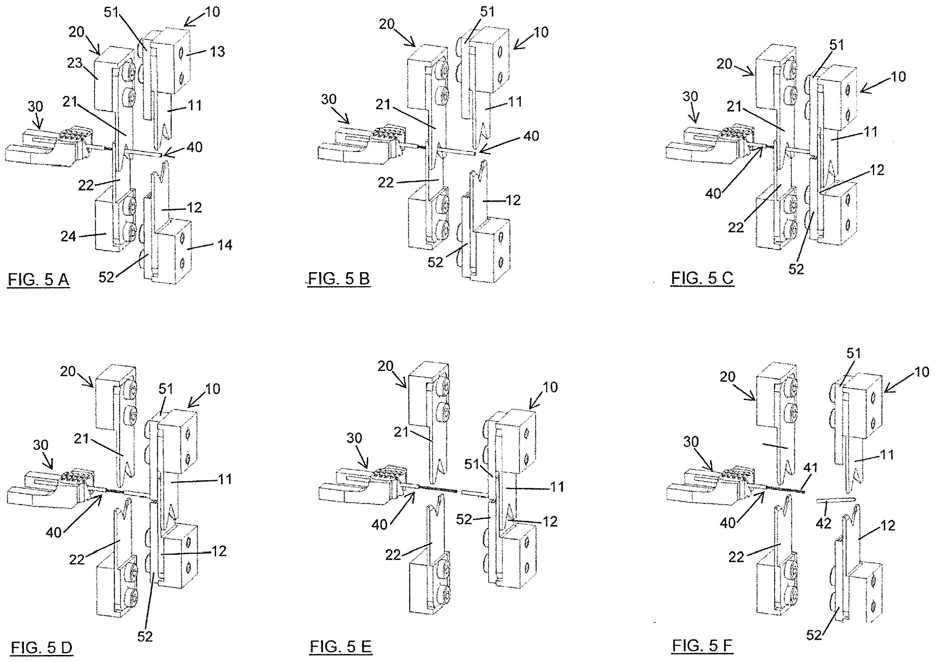

Nachfolgend wird anhand der Figuren 5A-5F eine zweite Ausführungsform beschrieben.

Bei der zweiten Ausführungsform der Abisoliervorrichtung 100 enthält die Abisoliervorrichtung 100 eine Greifereinrichtung 50 zum Abziehen der Isolation. Dabei kann die Greifereinrichtung an der Nullschnittmessereinrichtung angebracht sein, so dass sich die Greifereinrichtung mit der Nullschnittmessereinrichtung bewegt oder die Greifereinrichtung ist als eigenständige Einheit, beispielsweise als eigenständige Station, in der Abisoliervorrichtung 100 konfiguriert. Die Greifereinrichtung ist so ausgestattet, dass die Kabelisolation durch die Greifereinrichtung von der Kabellitze abgezogen oder abgetrennt wird. Dabei kann die Geometrie und Struktur der Greifereinrichtung so gewählt sein, dass eine Beschädigung der Kabellitzen 41 verhindert wird. Beispielsweise kann die Greifereinrichtung aus einem Polymer und/oder metallischen Bauteilen bestehen.

Bei der zweiten Ausführungsform umfasst die Abisoliervorrichtung 100, ähnlich wie in der ersten Ausführungsform, die Abisoliermessereinrichtung 20, die Nullschnittmessereinrichtung 10, den Kabelgreifer 30, die Absaugeinrichtung 60, die Auswerteeinheit. Zusätzlich ist die Nullschnittmessereinrichtung 10 von der Abisoliermessereinrichtung 20 elektrisch isoliert angebracht und die Nullschnittmessereinrichtung 10 ist relativ zur Abisoliermessereinrichtung 20 voreilend. Die Nullschnittmessereinrichtung ist in der zweiten Ausführungsform so ausgestattet, dass der Abziehvorgang durch die Greifereinrichtung, welche an der Nullschnittmessereinrichtung konfiguriert ist, durchgeführt werden kann (Figur 5A-5F). In einer weiteren Ausführungsform kann die Greifereinrichtung auch eigenständig zur Nullschnittmessereinrichtung konfiguriert sein.

Die zweite Ausführungsform der Abisoliervorrichtung 100 umfasst die Abisoliermessereinrichtung 20, die Nullschnittmessereinrichtung 10 und eine Greifereinrichtung 50, wobei die Greifereinrichtung den Abisoliervorgang durchführt.

In der zweiten Ausführungsform ist die Greifereinrichtung 50 an der Nullschnittmessereinrichtung angebracht. Dabei bewegt sich die obere Hälfte der Greifereinrichtung 51 mit dem ersten Messer der Nullschnittmessereinrichtung 11 und der ersten Messer Halterung 13 der Nullschnittmessereinrichtung 10 in die gleiche Richtung.

Die untere Hälfte der Greifereinrichtung 52 bewegt sich mit dem zweiten Messer der Nullschnittmessereinrichtung 12 und der zweiten Messerhalterung 14 der Nullschnittmessereinrichtung 10 in die gleiche Richtung. Im Anschluss und Kombination an den letzten Schritt der Figur 3F, bei dem die Kabelisolation 42 durchtrennt wurde, schließt sich die Verfahrensabfolge der Figur 5a-5F an, welche die zweite Ausführungsform der Abisoliervorrichtung 100 darstellt.

Der Schritt in Figur 5 A stellt dabei den Schritt aus Figur 3 F in der zweiten Ausführungsform mit der Greifereinrichtung wiederholend dar. Die Abfolge von Figur 5A-5F ist daher mit der Abfolge aus Figur 3A-3F kombinierbar. Im ersten Schritt der zweiten Ausführungsform, Figur 5 B, bewegen sich die Nullschnittmessereinrichtung 10 und die Greifereinrichtung 50 gleichzeitig in Richtung der Abisoliermessereinrichtung 20 in einer zur Längsrichtung des Kabels parallelen Richtung. Anschließend schließen die Messer 11, 12 der Nullschnittmessereinrichtung so weit, bis die beiden Hälften der Greifereinrichtung 51, 52 Kontakt mit der Kabelisolation 42 bekommen (Figur 5 C). Dann öffnen die beiden Messer der Abisoliermessereinrichtung 21, 22, durch eine Bewegung in entgegengesetzte Richtung, und entfernen sich vom Kabel (Figur 5 D). Damit werden das Kabel und die Kabelisolation nicht mehr durch die Abisoliermessereinrichtung festgehalten.

Danach bewegen sich die Nullschnittmessereinrichtung und die Greifereinrichtung gemeinsam in die entgegengesetzte Richtung, eine zur Längsrichtung des Kabels 40 parallelen Richtung, um den Abstand zur Abisoliermessereinrichtung zu vergrößern (Figur 5 E). Dabei wird nun über den Kontakt zwischen der Greifereinrichtung 50 und der Kabelisolation 42, die Kabelisolation 42 vom Kabel 40 und der Kabellitze 41 gestreift (Abziehvorgang). Anschließend öffnet die Nullschnittmessereinrichtung gemeinsam mit der Greifereinrichtung wieder und erhöht damit den Abstand zwischen den beiden Messern 11, 12 und den beiden Hälften der Greifereinrichtung 51, 52 (Figur 5 F). Dadurch ist die abgetrennte Kabelisolierung 42 lose und kann beispielweise durch die Absaugeinrichtung 60 aus der Abisoliervorrichtung 100 entfernt werden.

In einer alternativen Ausführungsform (nicht dargestellt) kann die Greifereinrichtung nicht an der Nullschnittmessereinrichtung konfiguriert sein und eigenständig bewegt werden. Dabei erfolgt der Abziehvorgang der Kabelisolierung 42 durch die Greifereinrichtung 50, so dass die Abisolierung von der Kabellitze 41 abgestreift wird. Dabei kann die Greifereinrichtung als eigenständiger Vorgang nachgeschaltet konfiguriert sein.

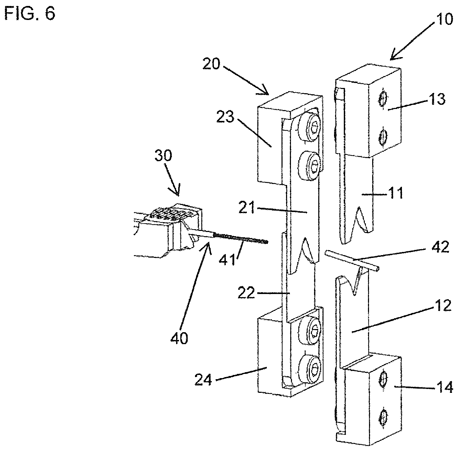

Anhand von Figur 6 wird eine dritte Ausführungsform beschrieben.

Die Abisoliervorrichtung 100 umfasst bei der dritten Ausführungsform die Abisoliermessereinrichtung 20, die Nullschnittmessereinrichtung 10, den Kabelgreifer 30, die Absaugeinrichtung 60, und die Auswerteeinheit. Zusätzlich ist die Nullschnittmessereinrichtung 10 von der Abisoliermessereinrichtung 20 elektrisch isoliert angebracht und die Nullschnittmessereinrichtung 10 ist relativ zur Abisoliermessereinrichtung 20 voreilend. Die Abisoliervorrichtung 100 ist in der dritten Ausführungsform so ausgestattet, dass der Abziehvorgang durch die Abisoliermessereinrichtung 20 durchgeführt werden kann (Figur 6).

Bei der dritten Ausführungsform umfasst die Abisoliervorrichtung 100 eine Abisoliermessereinrichtung 20 und eine Nullschnittmessereinrichtung 10, die Kabelgreifer 30, die Absaugeinrichtung 60 und die Auswerteeinheit wie in Figur 1 dargestellt, wobei der Abziehvorgang durch die Abisoliermessereinrichtung 20 durchgeführt wird.

Der Vorgang der dritten Ausführungsform beginnt wieder beim letzten Schritt von Figur 3F und der Ablauf von Figur 6 ist mit dem Ablauf in Figur 3A-3F kombinierbar. In einem ersten Schritt öffnen die Messer der Abisoliermessereinrichtung 21, 22 in entgegengesetzter Richtung leicht durch einen Rückhub, so dass die beiden Messer des Abisoliermesserpaars 21, 22 nur noch einen Kontakt zur Kabelisolierung 42 besitzen. Für den Abziehvorgang durch die Abisoliermessereinrichtung (Figur 6) bewegt sich die Abisoliermessereinrichtung, wobei die Messer 21, 22 der Abisoliermessereinrichtung nur auf Kontakt mit der Kabelisolierung 42 sind, gleichzeitig vom Kabel und Kabelgreifer 30 weg, in einer zur Längsrichtung des Kabels parallelen Richtung, um den Abstand zwischen dem Kabelgreifer und der Abisoliermessereinrichtung zu vergrößern. Bei dieser Bewegung zur Vergrößerung des Abstandes zwischen Kabelgreifer 30 und Abisoliermessereinrichtung 20 wird die Kabelisolation 42 vom Kabel 40 und der Kabellitze 41 abgestreift. Die lose Kabelisolation kann nun beispielsweise durch die Absaugeinrichtung 60 aus der Abisoliervorrichtung 100 entfernt werden.

Eine andere Ausführungsform des Abisoliervorgangs (nicht dargestellt) ist, dass der Kabelgreifer 40 das Kabel nach Schritt Figur 3 F und dem Rückhub der Abisoliermessereinrichtung 20, in die entgegengesetzte Bewegung führt, und damit der Abstand zwischen dem Kabelgreifer 40 und der Abisoliermessereinrichtung vergrößert. Durch diese entgegengesetzte Bewegung des Kabelgreifers wird die Kabelisolierung 42 vom Kabel 40 und der Kabellitze 41 an den Messern der Abisoliermessereinrichtung 20 abgestreift.

Eine weitere Ausführungsform des Abisoliervorgangs ist das Abisolieren durch die Abisoliermessereinrichtung 20 (nicht dargestellt), welche nach dem Schritt in Figur 3 F, die Messer der Abisoliermessereinrichtung öffnet und die Abisoliermessereinrichtung parallel, in Richtung der Nullschnittmessereinrichtung versetzt. Anschließend schneidet die Abisoliermessereinrichtung in die abgetrennte Kabelisolierung 42 leicht ein und zieht durch die Bewegung der Abisoliermessereinrichtung und Nullschnittmessereinrichtung in eine Richtung, mit einer Abstandsvergrößerung zur durchtrennten Kabelisolierung, parallel zur Längsrichtung des Kabels, die Kabelisolierung 42 vom Kabel 40 und der Kabellitze 41 ab.

In einer weiteren Ausführungsform kann die Abisolierlänge der Kabelisolierung 42 durch eine Abstandsvergrößerung oder Abstandverminderung zwischen der Abisoliermessereinrichtung 20 und der Nullschnittmessereinrichtung 10, in einer zur Längsrichtung des Kabels 40 parallelen Richtung, angepasst werden. Somit können verschiedene Abisolierlängen in der Abisoliervorrichtung 100 durchgeführt werden.

In einer weiteren Ausführungsform kann der Abisoliervorgang durch die Abisoliermessereinrichtung und der Kontaktierungseinrichtung so durchgeführt werden, dass die Abisoliermessereinrichtung den Nullschnitt durchführt. In einer weiteren Ausführungsform kann die Kontaktierungseinrichtung nur einen elektrischen Kontakt mit der Kabellitze herstellen und/oder nicht in das Kabel einschneiden. In einer weiteren Ausführungsform kann der Nullschnitt von der Abisoliermessereinrichtung oder der Kontaktierungseinheit durchgeführt werden, nachdem die Kabelisolierung 42 vom Kabel 40 und der Kabellitze 41 abisoliert worden ist. In einer weiteren Ausführungsform kann die Abisoliermessereinrichtung alle Funktionen und Schritte der Nullschnittmessereinrichtung übernehmen, so dass die Abisoliervorrichtung 100 kostengünstiger hergestellt werden kann.

Obwohl voranstehend V-förmige Schneidkanten der Messer 21, 22, 11, 12 beschrieben sind, kann die Schneidkante gemäß anderer Ausführungsformen auch eine andere Ausgestaltung aufweisen.

In einer weiteren Ausführungsform können die jeweiligen Messer oder ein Messer 11, 12, 21, 22 als Quetschmesser, Formmesser oder Düsenmesser ausgebildet sein. Da die Messerpaare einer solchen Messereinrichtung beim Einschneiden der Isolierung nicht überlappen, kann ein Kontaktieren der Messer vermieden werden.

## Patentansprüche

1. Abisoliervorrichtung (100) zum Entfernen einer Isolierung von einem Kabel, umfassend:
eine Abisoliermessereinrichtung (20), und
eine Kontaktiereinrichtung (10), wobei
die Abisoliermessereinrichtung (20) und die Kontaktiereinrichtung (10) unabhängig voneinander beweglich sind,
und die Kontaktiereinrichtung eingerichtet ist, an einem Endabschnitt des Kabels einen Kontakt mit einer oder mehreren Kabellitzen herzustellen.

2. Abisoliervorrichtung (100) nach Anspruch 1, wobei die Kontaktiereinrichtung eine Nullschnittmessereinrichtung ist.

3. Abisoliervorrichtung (100) nach Anspruch 1 oder 2, wobei ein Messer (11, 12) der Abisoliermessereinrichtung (20) gegenüber einem anderen Messer der Abisoliermessereinrichtung (20) elektrisch isoliert auf dem Messerhalter (13, 14) befestigt ist, und/oder ein erstes Element (21, 22) der Kontaktiereinrichtung (10) gegenüber einem anderen Element der Kontaktiereinrichtung (10) elektrisch isoliert auf dem Messerhalter (23, 24) befestigt ist.

4. Abisoliervorrichtung (100) nach einem der Ansprüche 1-3, wobei die Kontaktiereinrichtung (10) durch eine oder mehrere zusätzliche Verfahrensachsen unabhängig von der Abisoliermessereinrichtung (20) beweglich ist.

5. Abisoliervorrichtung (100) nach einem der Ansprüche 1-4, wobei die Abisoliervorrichtung eingerichtet ist, den Abstand zwischen der Abisoliermessereinrichtung (20) und der Kontaktiereinrichtung (10) zu variieren, wobei die Kontaktiereinrichtung (10) relativ zur Abisoliermessereinrichtung (20) voreilend konfiguriert ist.

6. Abisoliervorrichtung (100) nach einem der Ansprüche 1-5, wobei die Abisoliermessereinrichtung (20) und/oder die Kontaktiereinrichtung (10) mit einer Auswerteeinheit in Verbindung steht, wobei bevorzugt ist, dass die Auswerteeinheit eingerichtet ist, eine Potentialdifferenz zwischen Abisoliermessereinrichtung (20) und/oder Kontaktiereinrichtung (10) zu detektieren.

7. Abisoliervorrichtung (100) nach einem der Ansprüche 1-6, wobei die Abisoliervorrichtung eine Absaugeinrichtung (60) zur Absaugung der abgetrennten Kabelisolierung (42) und/oder den abgetrennten Nullschnitt enthält.

8. Abisoliervorrichtung (100) nach einem der Ansprüche 1-7, wobei die Abisoliervorrichtung einen Kabelgreifer (30) enthält, welcher ein Kabel in Richtung der Abisoliermessereinrichtung (20) oder entgegengesetzt führt und/oder durch Klemmung des Kabels und der Isolierung das Kabel fixiert.

9. Abisoliervorrichtung (100) nach einem der Ansprüche 1-8, wobei die Abisoliervorrichtung eine Greifereinrichtung (50) zum Abziehen der Isolation enthält.

10. Verfahren zum Abisolieren einer Isolierung eines Kabels mittels einer Abisoliermessereinrichtung (20) und einer Kontaktiereinrichtung (10),
**dadurch gekennzeichnet, dass** sich die Abisoliermessereinrichtung (20) und die Kontaktiereinrichtung (10) voneinander unabhängig bewegen.

11. Verfahren nach Anspruch 10, wobei die Kontaktiereinrichtung (10) oder die Abisoliermessereinrichtung (20) einen Detektionsvorgang mittels der Auswerteeinheit durchführen.

12. Verfahren nach einem der Ansprüche 10-11, wobei die Abisoliermessereinrichtung (20) und/oder die Kontaktiereinrichtung (10) durch einen Rückhub die Distanz zum Kabel vergrößern.

13. Verfahren nach einem der Ansprüche 10-12, wobei das Abziehen der Isolation (42) durch die Abisoliermessereinrichtung (20) erfolgt.

14. Verfahren nach einem der Ansprüche 10-12, wobei das Abziehen der Isolation (42) durch die Kontaktiereinrichtung (10) erfolgt.

15. Verfahren nach einem der Ansprüche 10-12, wobei das Abziehen der Isolation durch die Greifereinrichtung (50) erfolgt.
